(19) **Europäisches Patentamt**

**European Patent Office**

**Office européen des brevets**

(11) **EP 1 079 248 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
**G02B 6/34** *(2006.01)* **H04J 14/02** *(2006.01)*

(21) Anmeldenummer: **00117734.4**

(22) Anmeldetag: **17.08.2000**

(54) **ABSTIMMBARES ADD-DROP-CONTINUE-MODUL**

ADJUSTABLE ADD-DROP-CONTINUE MODULE

MODULE D'INSERTION-EXTRACTION-SUITE REGLABLE

(84) Benannte Vertragsstaaten:
**DE GB**

(30) Priorität: **23.08.1999 DE 19939853**

(43) Veröffentlichungstag der Anmeldung:
**28.02.2001 Patentblatt 2001/09**

(73) Patentinhaber: **SIEMENS AKTIENGESELLSCHAFT**
**80333 München (DE)**

(72) Erfinder:
• **Stoll, Detlef, Dr.**
  **81377 München (DE)**
• **Richter, Alexander, Dr.**
  **81475 München (DE)**
• **Bock, Harald, Dr.**
  **81479 München (DE)**
• **Leisching, Patrick, Dr.**
  **81247 München (DE)**

(56) Entgegenhaltungen:
**WO-A-98/49795          US-A- 5 748 349**

EP 1 079 248 B1

**Beschreibung**

Die Erfindung betrifft ein abstimmbares Add/Drop-Drop&Continue-Modul und ein abstimmbares Drop&Continue-Modul.

Bestehende und zukünftige optische Übertragungssysteme bzw. - netze, insbesondere nach dem WDM-Prinzip (Wavelength Division Multiplexing) arbeitende Übertragungssysteme bzw. -netze, werden um eine möglichst störungsfreie optische Signalübertragung zu gewährleisten redundant ausgestaltet, d.h. aus Zuverlässigkeitsgründen werden beispielsweise die eine und die zugehörige, redundante Verbindung innerhalb eines optischen Übertragungssystems bzw. -netzes über unterschiedliche, überwiegend räumlich getrennt geführte optische Fasern aufgebaut.

Desweiteren werden häufig Ringstrukturen zu Realisierung des optischen Übertragungsnetzes vorgesehen. Bei Übergängen zwischen unterschiedlichen Ringen bzw. optischen Ring-Übertragungsnetzen werden "Add/Drop"- bzw. "Drop&Continue"-Funktionen vorgesehen mit deren Hilfe das zu übertragende optische Signal aufgesplittet wird und sowohl im ursprünglichen Ring weiter gesendet als auch in den neuen Ring übergeleitet wird bzw. noch weitere eine unterschiedliche optische Wellenlänge bzw. Frequenz aufweisende Signale hinzugefügt werden. Zur rein optischen Realisierung derartiger Drop&Continue-Funktionen können Wellenlängen-Demultiplexer, optische Schalter und Wellenlängen-Multiplexer eingesetzt werden.

Zur Realisierung von Add/Drop-Funktionen sind Module bekannt, die aus zwei Zirkulatoren mit zwischengeschalteten abstimmbaren Filtern, beispielsweise Faser-Bragg-Gittern, bestehen - siehe hierzu die Produkt-Note "Drop-Filter mit Zirkulator und durchstimmbaren Faser-Bragg-Gitter" der Laser2000 GmbH (http://www.laser2000.de). Für die Realisierung von Drop&Continue-Funktionen sind diese Module nicht geeignet. Es ist jedoch denkbar, ein derartiges Modul mit optischen Splittern und optischen Schaltern zu ergänzen, um die Drop&Continue-Funktionalität zu realisieren.

Im US Patent Nr. 5,748,349 ist ein "Grating-based optical Add/Drop Multiplexer for WDM optical communication systems" beschrieben, bei dem mit Hilfe von nach einem optischen Zirkulator angeordneten abstimmbaren Faser-Bragg-Gitter Add/Drop-Funktionen realisiert sind. Hierzu wird die Resonanzfrequenz des bei der Resonanzfrequenz eine kleine Reflexionsdämpfung aufweisenden Faser-Bragg-Gitters auf die Frequenz des abzuführenden optischen Signals abgestimmt und dadurch das in das abgestimmte Faser-Bragg-Gitter eingespeiste optische Signal nahezu vollständig reflektiert und zu dem vorgeschalteten optischen Zirkulator zurückgestreut. Mit Hilfe des Zirkulators wird das reflektierte optische Signal zur optischen "Drop"-Faser geführt. Zur Realisierung einer Drop&Continue-Funktion sind auch hier noch weitere optische Splitter und Schalter vorzusehen, die eine zusätzliche Dämpfung des zu übertragenden optischen Signals bewirken.

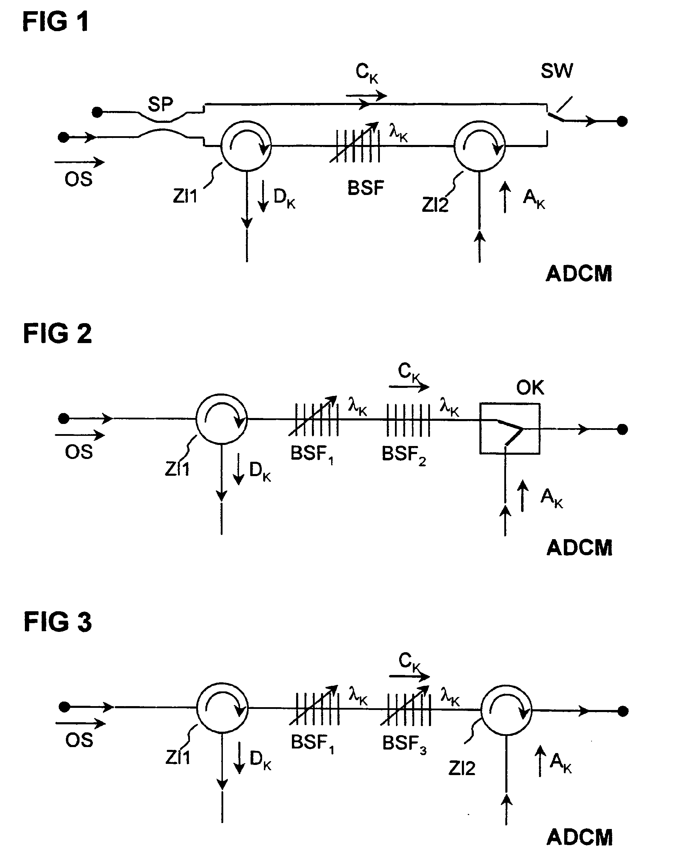

In Figur 1 ist ein gemäß dem Stand der Technik realisiertes "Add/Drop-Drop&Continue-Modul" dargestellt. Es besteht aus einem optischen Splitter SP, der ein optisches Signal OS in zwei etwa gleichstarke Teilsignale $D_K$, $C_K$ aufteilt, einem ersten und zweiten optischen Zirkulator ZI1,ZI2, einem abstimmbaren optischen Filter BSF, beispielsweise einem Faser-Bragg-Gitter, und einem optischen Schalter SW. Zur Realisierung der Drop&Continue-Funktion wird der eine Signalanteil $D_K$ über den ersten und zweiten optischen Zirkulator Z11, Z12 mit einem dazwischen geschalteten abstimmbaren optischen Filter BSF geführt und der andere Signalanteil $C_K$ über den optischen Schalter SW weitergeleitet (dargestellte Schalterstellung).

Bei einer Add/Drop-Funktion wird ebenfalls der eine Signalanteil $D_K$ abgezweigt. Gleichzeitig kann ein neues optisches Signal $A_K$ mit derselben Wellenlänge über den zweiten optischen Zirkulator ZI2 eingefügt werden. Durch die Verwendung des optischen Splitters SP weist das Modul grundsätzlich eine zusätzliche Dämpfung von mind. 3 dB auf. Entsprechend der Anzahl von Add/Drop-Funktionen bzw. Drop&Continue-Funktionen wird das beschriebene Add/Drop-bzw. Drop&Continue-Modul mehrfach in Reihe geschaltet, wodurch sich die Dämpfung noch erheblich erhöht.

Die der Erfindung zugrundeliegende Aufgabe besteht darin, ein Add/Drop-Drop&Continue-Modul bzw. ein Drop&Continue-Modul mit geringerer Einfügedämpfung anzugeben. Die Aufgabe wird ausgehend von einem Drop&Continue-Modul gemäß den Merkmalen des Patentanspruches 1 gelöst.

Der wesentliche Aspekt der Erfindung ist darin zu sehen, daß das abstimmbare Add/Drop-Drop&Continue-Modul bzw. das Drop&Continue-Modul zwei optische Filter aufweist, von denen zumindest eines abstimmbar ist und die zwischen einer Abzweigeeinrichtung für optische Signale und einer Einfügeinrichtung hintereinander angeordnet sind bzw. die einer Abzweigeeinrichtung für optische Signale nachgeschaltet sind, wobei das eine abstimmbare optische Filter eine kleinere Reflexionsdämpfung und eine größere Transmissionsdämpfung als das andere optische Filter aufweist - Anspruch 1 und 2. Vorteilhaft wird durch die Verwendung von zumindest einem abstimmbaren und einem weiteren optischen Filter die Drop&Continue-Funktionalität bei dem erfindungsgemäßen Add/Drop-Drop&Continue- bzw. Drop&Continue-Modul mit geringem schaltungstechnischen Aufwand realisiert, d.h. für die Realisierung der erfindungsgemäßen Drop&Continue-Funktionalität werden keine Leistungsteiler bzw. "Power-Splitter" und/oder zusätzliche optische Schalter benötigt. Desweiteren ist beim erfindungsgemäßen Add/Drop-Drop&Continue- bzw. Drop&Continue-Modul vorteilhaft nur die Resonanzfrequenz bzw. Durchlaßfrequenz des jeweiligen abstimmbaren optischen Filters, beispielsweise Faser-Bragg-Gitters, abzustimmen, um zwischen der Drop- und der Drop&Continue-Funktion umkonfigurieren zu können. Zur Realisierung der Drop-Funktion wird die Resonanzfrequenz bzw. Durchlaßfrequenz des abstimmbaren, eine kleinere Reflexionsdämpfung und eine größere Transmissionsdämpfung aufweisenden optischen Filters auf die Frequenz des abzuleitenden optischen Signals abgestimmt. Das abstimmbare optische Filter reflektiert das optische Signal nahezu vollständig. Hierbei sind die Transmissionsdämpfung und die Reflexionsdämpfung wie folgt definiert:

*Transmissionsdämpfung:*

$$-\log 10 \left( \frac{\textit{Leistung des transmittierten optischen Signals}}{\textit{Leistung des empfangenen optischen Signals}} \right)$$

*Reflexionsdämpfung:*

$$-\log 10 \left( \frac{\textit{Leistung des reflektierten optischen Signals}}{\textit{Leistung des empfangenen optischen Signals}} \right)$$

Analog dazu wird zur Realisierung der Drop&Continue-Funktion die Resonanzfrequenz bzw. die Durchlaßfrequenz des abstimmbaren, eine kleinere Reflexionsdämpfung und eine größere Transmissionsdämpfung aufweisenden optischen Filters in den Frequenzbereich zwischen zwei benachbarte WDM-Übertragungskanäle verschoben, so daß durch den Sperrbereich des abstimmbaren optischen Filters keine "Störung" bzw. Filterung der ankommenden optischen Signale erfolgt und mit Hilfe des zweiten, eine größere Reflexionsdämpfung und eine kleinere Transmissionsdämpfung aufweisenden, optischen Filters das optische Signal in etwa zur Hälfte reflektiert und der verbleibende Signalanteil weitergeleitet wird.

Ein weiterer wesentlicher Vorteil der Erfindung ist, daß beide optische Filter abstimmbar sind und als Bandsperrenfilter ausgeführt sind - Anspruch 3 und 4. Vorteilhaft bilden jeweils die zwei optischen Filter eine Filterstufe und mehrere derartige Filterstufen werden in Reihe geschaltet - Anspruch 7. Durch den Einsatz von zwei abstimmbaren Filtern kann auf vorteilhafte Weise das nahezu vollständig "reflektierende" optische Filter dem zur Hälfte "weiterleitenden" bzw. "reflektierenden" optischen Filter auch nachgeschaltet werden und gleichzeitig mehrere WDM-Kanäle aus- bzw. eingekoppelt und/oder weitergeleitet werden. Zusätzlich kann bei der erfindungsgemäßen Verwendung von zwei abstimmbaren optischen Filtern die Resonanzfrequenz der beiden abstimmbaren optischen Filter beispielsweise in den Frequenzbereich zwischen den benachbarten und den betrachteten WDM-Kanal verschoben werden, wodurch das ankommende optische Signal durch das erfindungsgemäße Modul geführt werden kann, ohne das ein Teil des optischen Signals abgeführt bzw. ein weiteres optisches Signal zugeführt wird. Somit wird keine Filterung durch die beiden optischen Filter am optischen Signal durchgeführt und das ankommende optische Signal wird durch das Modul durchgeführt. In der Fachwelt wird die Durchführung des optischen Signals als "Express"-Modus bezeichnet.

Weitere vorteilhafte Ausgestaltungen des erfindungsgemäßen Add/Drop-Drop&Continue-Moduls bzw. des Drop&Continue-Moduls, insbesondere eine abstimmbare Add/Drop-Drop&Continue- bzw. Drop&Continue-Einrichtung sind den weiteren Ansprüchen zu entnehmen.

Die Erfindung wird im folgenden anhand von Ausführungsbeispielen näher erläutert. Dabei zeigen

Figur 1 ein Add/Drop-Drop&Continue-Modul nach dem Stand der Technik,
Figur 2 das erfindungsgemäße Add/Drop-Drop&Continue-Modul,
Figur 3 eine Variante dieses Add/Drop-Drop&Continue-Moduls,
Figur 4 eine Variante zum gleichzeitigen Auskoppeln, Weiterleiten und Einkoppeln mehrerer WDM-Kanäle, und
Figur 5 eine Reihenschaltung mehrerer Add/Drop-Drop/Continue-Module.

Das in Figur 1 dargestellte Add/Drop-Drop&Continue-Modul wurde bereits in der Beschreibungseinleitung näher erläutert. Bei ausschließlicher Realisierung von Add/Drop-Funktionen kann auf den optischen Splitter SP und den optischen Schalter SW verzichtet werden. Desweiteren können beim Einsatz von hinsichtlich ihres Durchlaßverhaltens sowie Reflexions- und Transmissionsverhaltens einstellbaren optischen Filtern BSF die optischen Splitter SP und optischen Schalter SW entfallen. Jedoch erfordert die Entwicklung bzw. der Entwurf derartig flexibel durchstimmbarer optischer Filter BSF einen hohen und somit kostenintensiven Entwicklungsaufwand.

In Figur 2 ist beispielsweise eine Realisierung des erfindungsgemäßen Add/Drop-Drop&Continue-Moduls dargestellt, wobei im Vergleich zu Figur 1 anstelle des optischen Filters BSF ein erstes und zweites optisches Filter $BSF_1$, $BSF_2$ zur Realisierung beispielsweise der Drop&Continue-Funktion vorgesehen ist und der zweite optische Zirkulator Zl2 durch einen optischen Koppler OK ersetzt worden ist. Das erste optische Filter $BSF_1$ ist hinsichtlich der Durchlaß- bzw. Resonanzfrequenz (bzw. -wellenlänge) $\lambda_k$ abstimmbar (in den Figuren jeweils durch einen schrägen Pfeil angedeutet) und weist im Vergleich zum zweiten optischen Filter $BSF_2$ eine kleinere Reflexionsdämpfung und eine größere Transmissionsdämpfung auf, d.h. das erste optische Filter $BSF_1$ reflektiert nahezu vollkommen das optische Signal OS, vorausgesetzt das seine Durchlaßfrequenz im Frequenzbereich des optischen Signals OS bzw. des auszukoppelnden WDM-Kanals k liegt. Das zweite optische Filter $BSF_2$ ist beispielsweise nicht hinsichtlich seiner Durchlaßfrequenz abstimmbar. Es weist im Vergleich zum abstimmbaren, ersten optischen Filter $BSF_1$ eine höhere Reflexionsdämpfung und eine geringere Transmissionsdämpfung auf, so daß der eine Signalanteil $C_K$ des optischen Signals OS an den optischen Koppler OK weitergeleitet wird und der weitere Signalanteil $D_K$ reflektiert sowie über den ersten optischen Zirkulator Zl1 an die "Drop"-Faser geführt wird.

Wird das erfindungsgemäße Add/Drop-Drop&Continue-Modul ausschließlich für die Realisierung von Add&Drop-Funktionen konfiguriert, so wird die Durchlaßfrequenz $\lambda_k$ des ersten optischen Filters $BSF_1$ auf die Frequenz des abzuführenden WDM-Kanals k abgestimmt, wodurch eine nahezu vollständige Reflexion des optischen Signals OS bzw. eine Rückführung des WDM-Kanals k durchgeführt wird. Das rückgeführte bzw. reflektierte optische Signal OS wird über den ersten optischen Zirkulator Zl1 ausgekoppelt. Zusätzlich wird die "Add"-Funktion - wie bereits in Figur 1 dargestellt - mit Hilfe des optischen Kopplers OK realisiert, über den das neue, dieselbe Wellenlänge aufweisende, optische Signal $A_K$ zur weiteren optischen Übertragung eingekoppelt wird. Die Verwendung eines optischen Kopplers OK führt zwar zu einer Reduzierung der Realisierungskosten, trägt aber auch zu einer Erhöhung der Einfügedämpfung um ca. 3dB des Add-Drop-Continue-Moduls bei.

Zur Realisierung der Drop&Continue-Funktion wird die Durch-Durchlaßfrequenz $\lambda_k$ des ersten optischen Filters $BSF_1$ in den Frequenzbereich zwischen einen der benachbarten WDM-Kanäle k-1,k+1 und den betrachteten WDM-Kanal k gesteuert, d.h. das optische Signal OS tritt ungestört durch das erste optische Filter $BSF_1$ hindurch und wird mit Hilfe des zweiten, eine bereits abgestimmte Durchlaßfrequenz $\lambda_k$ aufweisenden, optischen Filters $BSF_2$ gefiltert. Aufgrund der Filterung wird nahezu die Hälfte des optischen Signals OS in Form des einen Signalanteils $C_K$ durch das zweite Filter $BSF_2$ weitergeleitet und der verbleibende Teil des optischen Signals OS in Form des weiteren Signalanteils $D_K$ reflektiert. Somit kann durch die Wahl der Durchlaßfrequenz $\lambda_k$ des abstimmbaren ersten, optischen Filters $BSF_1$ mit dem erfindungsgemäßen Add/Drop-Drop&Continue-Modul zwischen der Add/Drop-Funktion und der Drop&Continue-Funktion umgeschaltet werden, ohne das optische Schalter SW erforderlich sind.

In Figur 3 ist eine Variante des Add/Drop-Drop&Continue-Moduls dargestellt, bei dem anstelle des zweiten optischen Filters $BSF_2$ ein drittes, abstimmbares optisches Filter $BSF_3$ vorgesehen ist, dessen Eigenschaften hinsichtlich Reflexionsdämpfung und Transmissionsdämpfung mit den Eigenschaften des zweiten optischen Filter $BSF_2$ übereinstimmen. Zusätzlich ist der optische Koppler OK durch den zweiten optischen Zirkulator Zl2 ersetzt worden. Zur Realisierung der Add-Funktion wird die Resonanzfrequenz des ersten abstimmbaren optischen Filters $BSF_1$ auf die Frequenz des einzukoppelnden, neuen optischen Signals $A_K$ abgestimmt, wodurch die Verwendung des zweiten optischen Zirkulator Z12 möglich wird. Die Resonanzfrequenz des dritten optischen Filters $BSF_3$ wird in den Frequenzbereich zwischen dem betrachteten und dem benachtbarten WDM-Kanal k,k+1 gelegt.

Bei der Realisierung des erfindungsgemäßen Drop&Continue-Moduls kann auf den beim erfindungsgemäßen Add/Drop-Drop&Continue-Modul vorgesehenen zweiten optischen Zirkulator Zl2 bzw. optischen Koppler OK verzichtet werden - in den Figuren 1 bis 5 nicht explizit dargestellt.

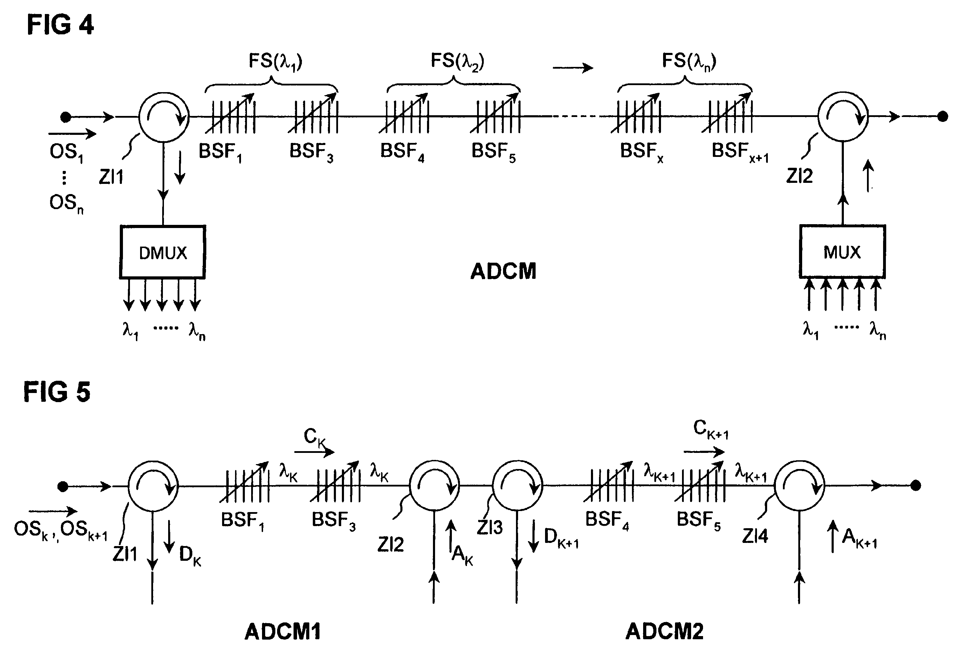

Die Figur 4 zeigt eine weitere Variante des erfindungsgemäßen Add/Drop-Drop&Continue-Moduls zum gleichzeitigen Auskoppeln, Weiterleiten und Einkoppeln mehrerer WDM-Kanäle (k=1,2,...,n). Hierzu sind jeweils ein erstes abstimmbares und ein drittes abstimmbares optisches Filter $BSF_1$,$BSF_3$ zu einer Filterstufe FS1,FS2,...,FSn zusammengefaßt, wobei die optischen Filter $BSF_1$,$BSF_2$ einer Filterstufe jeweils für eine bestimmte Durchlaßfrequenz $\lambda_1$ vorgesehen sind. Derartige Filterstufen FS1, FS2,..., FSn werden in Reihe zwischen dem ersten und zweiten Zirkulator Zl1,Zl2 eingeschaltet, wodurch mehrere WDM-Kanäle (k=1,2,...,n) annähernd gleichzeitig aus- bzw. eingekoppelt sowie weitergeleitet werden können. In Figur 4 ist eine erste, zweite und n-te Filterstufe FS1,FS2,...,FSn mit einer ersten, zweiten und n-ten Durchlaßfrequenz bzw. - wellenlänge $\lambda_1,\lambda_2,\lambda_3$ dargestellt. Durch einen an den ersten optischen Zirkulator Zl1 angeschlossenen Demultiplexer DMUX und einen an den zweiten optischen Zirkulator Zl2 angeschlossenen Multiplexer MUX können die einzelnen optischen Signale $OS_1$,...,$OS_n$ bzw. WDM-Kanäle (k=1,2,...,n) abgezweigt oder eingekoppelt werden.

Als weitere Alternative um mehrere optische Signale $OS_k$,$OS_{k+1}$ bzw. mehrere WDM-Kanäle k,k+1 abzweigen bzw. einkoppeln zu können, können mehrere der erfindungsgemäßen Add/Drop-Drop&Continue-Module ADCM1,ADCM2 entsprechend Figur 5 in Reihe geschaltet werden. Dabei wird mit einem ersten Add/Drop-Drop&Continue-Modul ADCM1 ein erster Signalanteil $D_K$ ausgekoppelt und ein erstes neues optisches Signal $A_K$ eingekoppelt sowie mit einem zweiten Add-Drop-Continue-Modul ADCM2 ein zweiter Signalanteil $D_{K+1}$ ausgekoppelt und ein zweites neues optisches Signal $A_{K+1}$ eingekoppelt.

**Patentansprüche**

1. Abstimmbares Drop&Continue-Modul mit zwei optischen Filtern ($BSF_1,BSF_2$), von denen zumindest eines abstimmbar ist und die einer Abzweigeeinrichtung (Zl1) für optische Signale (OS) nachgeschaltet sind, wobei das eine abstimmbare optische Filter ($BSF_1$) eine kleinere Reflexionsdämpfung und eine größere Transmissionsdämpfung als das andere optische Filter ($BSF_2$) aufweist.

2. Abstimmbares Drop&Continue-Modul nach Anspruch 1,
**dadurch gekennzeichnet,**
**dass** die zwei optischen Filter ($BSF_1$, $BSF_2$) zwischen der Abzweigeeinrichtung (Zl1) für optische Signale (OS) und einer Einfügeeinrichtung (Zl1, OK) hintereinander angeordnet sind.

3. Abstimmbares Drop&Continue-Modul nach Anspruch 1 oder 2,
**dadurch gekennzeichnet,**
**dass** beide optischen Filter ($BSF_1,BSF_3$) abstimmbar sind.

4. Abstimmbares Drop&Continue-Modul nach einem der vorherigen Ansprüche,
**dadurch gekennzeichnet,**
**dass** beide optischen Filter ($BSF_1,BSF_2$) als Bandsperrenfilter ausgeführt sind.

5. Abstimmbares Drop&Continue-Modul nach einem der vorherigen Ansprüche,
**dadurch gekennzeichnet,**
**dass** als Abzweigeeinrichtung Zirkulatoren (Zl1) vorgesehen sind.

6. Abstimmbares Drop&Continue-Modul nach einem der Ansprüche 2 bis 5,
**dadurch gekennzeichnet,**
**dass** als Einfügeinrichtung Zirkulatoren (Zl2) oder optische Koppler (OK) vorgesehen sind.

7. Abstimmbares Drop&Continue-Modul nach einem der vorherigen Ansprüche,
**dadurch gekennzeichnet,**
**dass** das abstimmbare optische Filter ($BSF_1$) dem anderen optischen Filter ($BSF_2$) vorgeschaltet ist.

8. Abstimmbares Drop&Continue-Modul nach einem der vorherigen Ansprüche,
**dadurch gekennzeichnet,**
**dass** jeweils die zwei optischen Filter ($BSF_1$, $BSF_2$) eine Filterstufe ($FS(\lambda_1)$) bilden und mehrere derartige Filterstufen ($FS(\lambda_1)$, $FS(\lambda_2)$,..., $FS(\lambda_n)$) in Reihe geschaltet werden.

9. Abstimmbares Drop&Continue-Modul nach einem der vorherigen Ansprüche,
**dadurch gekennzeichnet,**
**dass** die beiden abstimmbaren Filter ($BSF_1,BSF_3$)derart ausgestaltet sind, dass bei einer geeigneten Abstimmung keine Filterung an den optischen Signalen (OS) durchgeführt wird.

10. Abstimmbare Drop&Continue-Einrichtung,
**dadurch gekennzeichnet,**
**dass** mehrere in Reihe geschaltete Drop&Continue-Module nach einem der Ansprüche 1 bis 9 vorgesehen sind.

**Claims**

1. Tuneable Drop&Continue module having two optical filters ($BSF_1$, $BSF_2$), of which at least one is tuneable and which are connected after a drop device (z11) for optical signals (OS), the one tuneable filter ($BSF_1$) having a lower reflection loss and a greater transmission loss than the other optical filter ($BSF_2$) .

2. Tuneable Drop&Continue module according to Claim 1,

**characterised in that**
the two optical filters ($BSF_1$, $BSF_2$) are arranged in series between the drop device (Z11) for optical signals (OS) and an add device (Z11, OK).

3. Tuneable Drop&Continue module according to Claim 1 or 2,
**characterised in that**
both optical filters ($BSF_1$, $BSF_2$) are tuneable.

4. Tuneable Drop&Continue module according to any of the preceding claims,
**characterised in that**
both optical filters ($BSF_1$), $BSF_2$) are designed as bandstop filters.

5. Tuneable Drop&Continue module according to any of the preceding claims,
**characterised in that**
circulators (Z11) are provided as the drop device.

6. Tuneable Drop&Continue module according to any of Claims 2 to 5,
**characterised in that**
circulators (Z12) or optical couplers (OK) are provided as the add device.

7. Tuneable Drop&Continue module according to any of the preceding claims,
**characterised in that**
the tuneable optical filter ($BSF_1$) is connected in front of the other optical filter ($BSF_2$).

8. Tuneable Drop&Continue module according to any of the preceding claims,
**characterised in that**
each pair of optical filters ($BSF_1$, $BSF_2$) forms a filter stage ($FS(\lambda_1)$), and a plurality of such filter stages ($FS(\lambda_1)$, $FS(\lambda_2)$, ..., $FS(\lambda_n)$) are cascaded.

9. Tuneable Drop&Continue module according to any of the preceding claims,
**characterised in that**
the two tuneable filters ($BSF_1$, $BSF_2$) are designed such that for suitable tuning the optical signals (OS) are not filtered.

10. Tuneable Drop&Continue device,
**characterised in that**
a plurality of cascaded Drop&Continue modules according to any of Claims 1 to 9 are provided.

**Revendications**

1. Module d'extraction et suite réglable, comprenant deux filtres optiques ($BSF_1$, $BSF_2$), dont l'un au moins est réglable et qui sont montés en aval d'un dispositif de dérivation (ZI1) pour des signaux optiques (OS), l'un filtre optique réglable ($BSF_1$) présentant un plus petit affaiblissement de réflexion et un plus grand affaiblissement de transmission que l'autre filtre optique ($BSF_2$).

2. Module d'extraction et suite réglable selon la revendication 1, **caractérisé en ce que** les deux filtres optiques ($BSF_1$, $BSF_2$) sont disposés l'un derrière l'autre entre le dispositif de dérivation (ZI1) pour signaux optiques (OS) et un dispositif d'insertion (ZI1, OK).

3. Module d'extraction et suite réglable selon la revendication 1 ou 2, **caractérisé en ce que** les deux filtres optiques ($BSF_1$, $BSF_3$) sont réglables.

4. Module d'extraction et suite réglable selon l'une des revendications précédentes, **caractérisé en ce que** les deux filtres optiques ($BSF_1$, $BSF_2$) sont réalisés en tant que filtres bloque-bande.

5. Module d'extraction et suite réglable selon l'une des revendications précédentes, **caractérisé en ce que** sont prévus, en tant que dispositif de dérivation, des circulateurs (ZI1).

**6.** Module d'extraction et suite réglable selon l'une des revendications 2 à 5, **caractérisé en ce que** sont prévus, en tant que dispositif d'insertion, des circulateurs (ZI2) ou des coupleurs optiques (OK).

**7.** Module d'extraction et suite réglable selon l'une des revendications précédentes, **caractérisé en ce que** le filtre optique réglable ($BSF_1$) est monté en amont de l'autre filtre optique ($BSF_2$).

**8.** Module d'extraction et suite réglable selon l'une des revendications précédentes, **caractérisé en ce que** les deux filtres optiques ($BSF_1$, $BSF_2$) forment dans chaque cas un étage de filtrage ($FS(\lambda_1)$) et plusieurs tels étages de filtrage ($FS(\lambda_1)$), ($FS(\lambda_2)$, ..., ($FS(\lambda_n)$) sont montés en série.

**9.** Module d'extraction et suite réglable selon l'une des revendications précédentes, **caractérisé en ce que** les deux filtres optiques ($BSF_1$, $BSF_3$) sont réalisés de manière telle que n'est effectué, dans le cas d'un réglage approprié, aucun filtrage sur les signaux optiques (OS).

**10.** Dispositif d'extraction et suite réglable, **caractérisé en ce que** sont prévus plusieurs modules d'extraction et suite selon l'une des revendications 1 à 9 montés en série.

## FIG 1

$C_K$       SW

SP

$\overrightarrow{OS}$

Zl1    $\downarrow D_K$    BSF    $\lambda_K$    Zl2    $\uparrow A_K$

**ADCM**

## FIG 2

$C_K$     OK

$\overrightarrow{OS}$

Zl1   $\downarrow D_K$   $BSF_1$   $\lambda_K$   $BSF_2$   $\lambda_K$   $\uparrow A_K$

**ADCM**

## FIG 3

$C_K$

$\overrightarrow{OS}$

Zl1   $\downarrow D_K$   $BSF_1$   $\lambda_K$   $BSF_3$   $\lambda_K$   Zl2   $\uparrow A_K$

**ADCM**

## FIG 4

FS($\lambda_1$)      FS($\lambda_2$)     →     FS($\lambda_n$)

OS$_1$
⋮
OS$_n$

ZI1    BSF$_1$    BSF$_3$    BSF$_4$    BSF$_5$    BSF$_x$    BSF$_{x+1}$    ZI2

DMUX        ADCM        MUX

$\lambda_1$ ····· $\lambda_n$             $\lambda_1$ ····· $\lambda_n$

## FIG 5

$C_K$                $C_{K+1}$

OS$_{k'}$, OS$_{k+1}$    ZI1    $D_K$    BSF$_1$    $\lambda_K$   BSF$_3$   $\lambda_K$   ZI2   $A_K$   ZI3   $D_{K+1}$   BSF$_4$   $\lambda_{K+1}$   BSF$_5$   $\lambda_{K+1}$   ZI4   $A_{K+1}$

ADCM1                  ADCM2

EP 1 079 248 B1